# EUROPEAN PATENT SPECIFICATION

(11) **EP 2 183 069 B1**
(45) Date of publication and mention of the grant of the patent: **18.04.2012**
(21) Application number: 08762206.4
(22) Date of filing: 29.05.2008
(51) Int. Cl.: B23B 31/20

(54) **ROTARY TOOL HOLDER ASSEMBLIES**
DREHWERKZEUGHALTERANORDNUNGEN
ASSEMBLAGES DE SUPPORT POUR OUTIL TOURNANT

(30) Priority: 30.05.2007 GB 0710293; 07.02.2008 GB 0802330
(43) Date of publication of application: 12.05.2010
(73) Proprietor: GSI Group Limited, Swift Valley Rugby Warwickshire CV21 1QN (GB)
(72) Inventor: STRATTON, John, David, Hampshire SO40 7BS (GB)
(74) Representative: Faulkner, Thomas John
(86) International application number: PCT/GB2008/001826
(87) International publication number: WO 2008/145997

(56) References cited:
- WO-A-91/13716
- WO-A-03/082501
- WO-A-2004/103619
- CH-A5- 693 354
- FR-A- 860 956
- SU-A1- 533 454
- US-A- 2 495 050
- US-A- 4 436 512
- US-A1- 2003 222 414

## Description

This invention relates to rotary tool holder assemblies according to the preamble of claim 1 and spindles comprising such rotary tool holder assemblies. Such rotary tool holder assemblies are known from document WO 03/082501.

A commonly used existing form of rotary tool holder assembly is referred to as a tapered collet tool holder assembly in which a tapered collet is received in a complementarily tapered bore. The tapered collet is arranged for receiving the shank of a tool and includes jaws for gripping a carried shank. A spring pack is provided for withdrawing the tapered collet into the tapered bore so as to drive the jaws into gripping contact with the shank of the carried tool.

Such tapered collet rotary tool holders can work effectively but when used at high rotational speeds undesirable effects can begin to occur which typically give rise to high stress levels in the flexible jaws of the toolholder. The applicants have realised that one cause of such undesirable effects is an undesired deformation of the collet, in particular deformation of the arm portions of the collet which terminate in the jaws.

It is desirable to provide rotary tool holder assemblies and spindles including such rotary tool holder assemblies which are intended to alleviate this problem.

WO 03/082501 describes a quick change adaptor for rotary machines in which the arms of a collet are supported along part of their length by virtue of being threadingly engaged with an outer nut.

According to the present invention there is provided a rotary tool holder assembly as claimed in claim 1.

Such contact between the arms and the supporting portion can help control the effect of centrifugal effects on the collet.

Each said other external portion of the arms may be disposed between the body portion of the collet and the respective jaw. Thus the current apparatus may provide support for a mid portion of the collet.

Said other external portions of the arms and the supporting portion may be arranged so that, in use, the supporting portion contacts with substantially the whole length of the portion of each arm which is outside of the tapered portion of the bore.

Each arm may comprise a projecting portion for contact with the supporting portion.

The contact surface may be non-tapered The contact surface may be cylindrical. Said other external portions of the arms may lie together on a cylindrical surface.

The main body of the collet may be supported in a main body support portion.

The main body support portion may be part of or separate from the support portion.

The rotary tool holder assembly may comprise spring means, typically a spring pack, for driving the collet axially relative to the collet receiving portion to actuate the jaws, with the spring means disposed around a portion of the collet.

The rotary tool holder assembly may comprise a shaft assembly which comprises the collet receiving portion, in which the collet is received. The shaft assembly may comprise a shaft of, for example, steel or ceramic material. The collet receiving portion may be carried within the shaft.

According to another aspect of the present invention there is provided a spindle comprising a rotary tool holder assembly of the type defined above journalled in a body of the spindle. Preferably the spindle is an aerostatic air bearing spindle with the tool holder assembly supported in air bearings.

The spindle may be a drilling spindle, in particular a printed circuit board (PCB) drilling spindle.

Embodiments of the present invention will now be described by way of example only with reference to the accompanying drawings in which:
Figure 1 schematically shows an aerostatic air bearing spindle comprising a rotary tool holder assembly;
Figure 2 is a section of a rotary tool holder assembly which is of a kind which can be used in the spindle shown in Figure 1;
Figure 3 is a sectional view of another rotary tool holder assembly of a kind which can be used in the spindle shown in Figure 1; and
Figure 4 is a cut away perspective view of yet another rotary tool holder assembly of a kind which can be used in a spindle of the type shown in Figure 1.

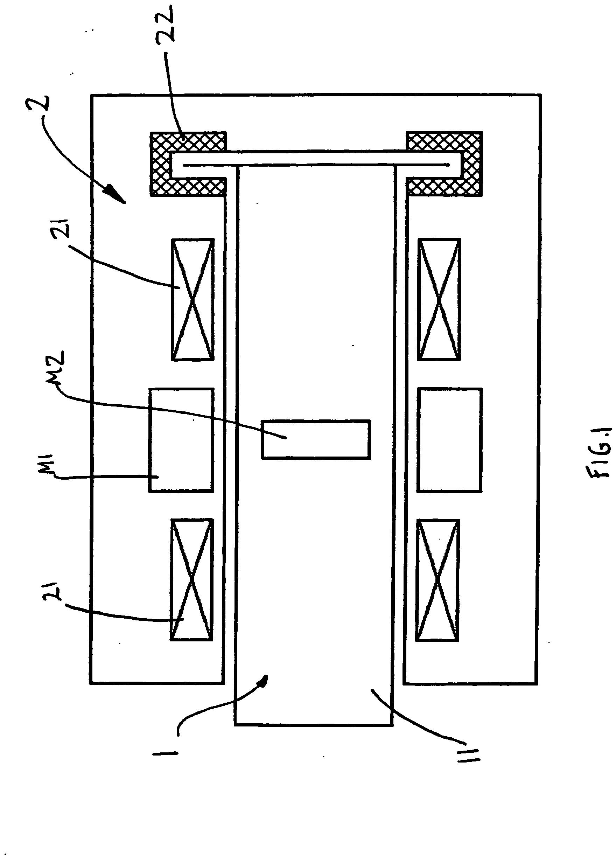

Figure 1 shows an aerostatic air bearing spindle of a type which might be used for example in a PCB drilling machine. The spindle comprises a rotary tool holder assembly 1 which comprises a shaft 11 and which is journalled for rotation in a spindle body 2. The spindle body 2 comprises a pair of radial air bearings 21 within which the rotary tool holder assembly is journalled and an axial air bearing 22 which axially supports the rotary tool holder assembly 1. A motor M is provided for rotatingly driving the rotary tool holder assembly 1 relative to the spindle body 2. The motor M may be a DC motor or an AC motor depending partly on design choice and partly on the material of the shaft 11 of the rotary tool holder assembly 1. Typically the motor M will comprise windings M1 mounted in the body 2 and further windings or a permanent magnet M2 provided on the rotary tool holder assembly 1.

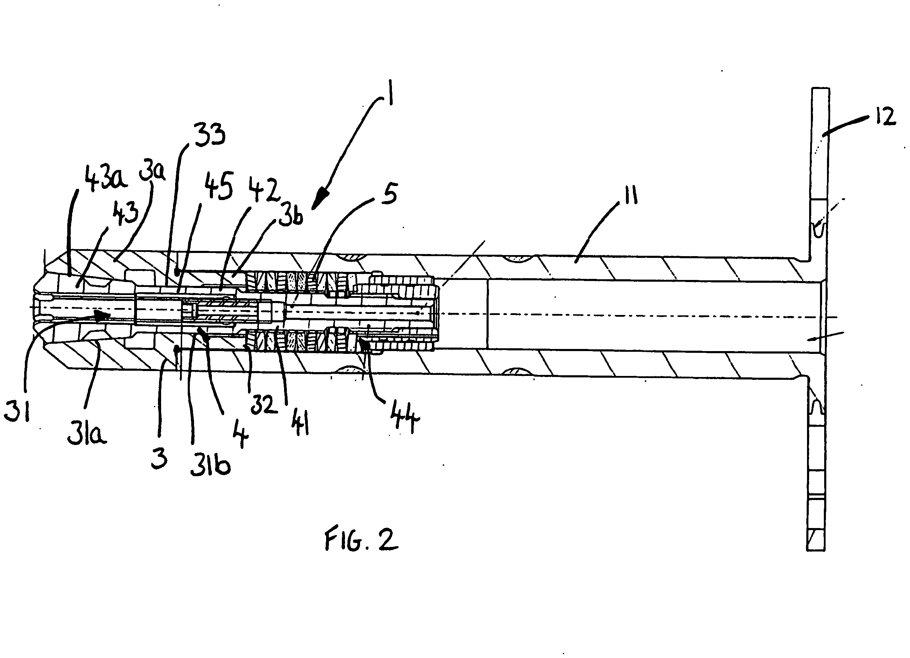

The detailed structure and operation of the spindle, in particular the air bearing 21, 22 structure and motor M structure is not of particular interest in the present application and standard high speed air bearing spindle techniques may be used in these areas. Thus, any more detailed description of these aspects of the spindle is omitted for the sake of brevity. It is the structure of the rotary tool holder assembly 1 which is of interest in the present application and this will be described in more detail below with particular reference to Figures 2 to 4.

Figure 2 shows a sectional view of a rotary tool holder assembly 1 of a type which may be used in a spindle of the type shown in Figure 1. The rotary tool holder assembly 1 comprises a shaft 11 which is arranged to run within the air bearings 21 of a spindle of the type shown in Figure 1 and terminates in a thrust runner 12 which is arranged to run within the axial bearing 22 of a spindle of the type shown in Figure 1.

The shaft 11 carries a collet receiving portion 3. In this embodiment both the shaft 11 and collet receiving portion 3 are of metallic material, typically steel, and the collet receiving portion 3 is welded in position in the shaft 11. It will be noted that the collet receiving portion 3 has a nose portion 3a which projects beyond the shaft 11 and an insert portion 3b which is received within the shaft 11.

The collet receiving portion 3 has an internal bore 31 within which a collet 4 is received. The collet 4 is arranged for receiving and gripping a tool (not shown). The collet 4 comprises a main body 41 which supports a plurality of arms 42. Each of the arms terminates in a respective jaw portion 43. The arms 42 are arranged to allow the jaw portions 43 to move radially relatively to the axis of the collet 4 such that the jaw portions may move inwards towards and against a carried tool in order to grip that tool. The arms 42 can flex relative to the main body of the collet 41 - the jaws 43, arms 42 and main body 41 are made as a single piece of material.

The outer surface of each jaw portion 43 is tapered and received in a complementarily tapered portion 31a of the bore 31 of collet receiving portion 3 such that axial movement of the collet 4 in a direction which is inwards into the collet receiving portion 3 causes the jaws 43 to be driven inwards towards the axis of the collet 4 due to the interaction of the tapers 31a, 43a.

The tool holder assembly 1 further comprises a spring pack 5 for acting on the collet 4 so as to withdraw the collet 4 into the collet receiving portion 3 so as to give the required axial movement to cause the jaws 43 to grip a carried tool. The spring pack 5 acts between a shoulder portion 32 of the collet receiving portion 3 and a corresponding shoulder portion 44 associated with the collet 4. The spring pack 5 is disposed around part of the main body 41 of the collet 4. When it is required to release a tool, a force may be applied to the end of the collet 43 remote from that end in which the tool is carried, for example by action of a push rod, in order to act against the spring pack 5 and drive the collet 4 out of the tapered portion 31a of the collet receiving portion 3 so allowing the jaws to relax outwards away from the axis of the collet 4 and release a carried tool.

The structure and operation of the rotary tool holder as described so far is largely conventional.

It will be noted that the arms 42 which are provided to allow the jaw portions 43 to move relative to the main body 41 of the collet 4 have a portion 45 which whilst in the bore 31 of the collet receiving portion 3 is not within the tapered portion 31a. This portion of the arms 45 between the jaws 43 and main body 41 is in a generally cylindrical portion 31b of the bore 31. Normally this mid-portion of the collet 44, i.e. that portion of the arms which is between the jaws and the main body of the collet 41, is unsupported, and deliberately so, to allow free movement of the collet arms 42 as the jaws 43 move inwards and outwards in response to the interacting tapers when gripping and releasing a tool.

However, it has been noted by the applicants that under conditions of high speed rotation (say in excess of 200,000 RPM) the collet 4 can become deformed and in particular the arms 42 may become deformed. In at least some circumstances the arms may adopt an S-shape as they deform. This can create excessive stress in the jaws, resulting in permanent deformation or complete failure.

In an effort to counter this effect and thus improve performance of the rotary tool holder assembly 1, in the present embodiment the collect receiving portion 3 comprises a supporting portion 33 which in this case is in the form of a projecting annular land provided around the inside of the bore 31 of the collet receiving portion 3. This supporting portion 33 and the collet 4, in particular the mid-region of the collet 4 are dimensioned so that at rest there is a small clearance between the supporting portion 33 and the collet 4 at the region of the supporting portion 33, i.e. the mid-portion of the arms 45. However, this clearance is chosen so that as the rotary tool holder assembly is spun up to operational speed and the collet begins to grow due to centrifugal effects, the collet 4 comes into contact with this supporting portion 33 preventing or resisting further growth of the collet 4 in that region. As a result of this, the stress level within the collet jaw can be controlled preventing possible damage or failure.

The rotary tool holder assembly 1 shown in Figure 2 represents one which has been designed to operate at in the order of 300,000 rpm. Thus the collet 4 and support portion 33 have been dimensioned to ensure that contact between the mid-portion of the arms 45 and support portion 33 occurs before excessive stress and deformation is induced in the collet jaws due to the very high speed. The amount of clearance to be provided between the support portion 33 and mid-portion 45 of the arms can be determined for a given design by use of, for example, finite element analysis and/or empirical testing. In the present embodiment a clearance of 15 microns has been used. The shaft 11 diameter is 12.7mm.

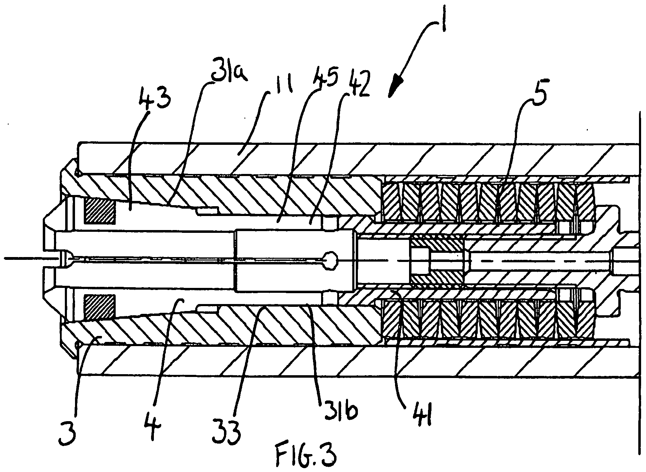

Figure 3 shows another rotary tool holder assembly 1 of a similar kind to that shown in Figure 2 and described above. Again, this rotary tool holder assembly 1 may be used in a spindle of the type shown in Figure 1. This rotary tool holder assembly 1 has many parts which correspond directly with those parts of the rotary tool holder assembly shown in Figure 2 and the same reference numerals will be used to indicate those parts.

The rotary tool holder assembly 1 again comprises a shaft 11 in which is mounted a collet receiving portion 3 carrying a collet 4. The structure and function of the tapered collet 4 and correspondingly tapered portion 31a of the collet receiving portion 3 is substantially the same as that of the rotary tool holder assembly shown in Figure 2 and thus further description of this will be omitted. Again there is a spring pack 5 for withdrawing the collet 4 into the collet receiving portion 3. In this rotary tool holder assembly 1 the shaft 11 is of ceramic material whereas the collet receiving portion 3 is of metallic material, typically steel, and is bonded into position within the ceramic shaft 11.

In this case again the collet 4 comprises jaws 43 at one end and a main body 41 at the other end. The jaws 43 are at the ends of arms 42 and again each arm has a mid-portion 45 which is disposed in a cylindrical portion 31b of the bore of the collet receiving portion 3. Here again a supporting portion 33 is provided in the collet receiving portion 3 for supporting the mid-portion of the collet 4, i.e. the mid-portion of the arms 45. In this case however, the supporting portion 33 has greater axial extent and allowing for movement of the collet 4 axially within the collet receiving portion 3 supports the arms 42 along substantially the whole of their length between the main body portion 41 and the jaws 43. That is to say substantially the whole portion of the non-tapered part 31b of the internal bore 3 of the collet receiving portion 3 is machined so to have a dimension which is such as to provide only a small clearance between the collet receiving portion 3 and the collet 4 at rest and allow for contact between those portions when the rotary tool holder assembly is spun up towards maximum operational speed. Furthermore, in the present rotary tool holder assembly the supporting portion 33 also provides support for part of the main body 41 of the collet. The remaining portion of the main body of the collet 41 resides within the spring pack 5.

Again, the dimensions of the collet 4 and supporting portion 33 and the desirable clearance therebetween can be determined for a particular design by use of finite element analysis and/or empirical testing. In the present case the rotary tool holder assembly is designed to be rotated at speeds of in the order of 370,000 rpm and the clearance provided between the collet and supporting portion 33 is in the order of 9 microns. The shaft 11 diameter is 12.7mm.

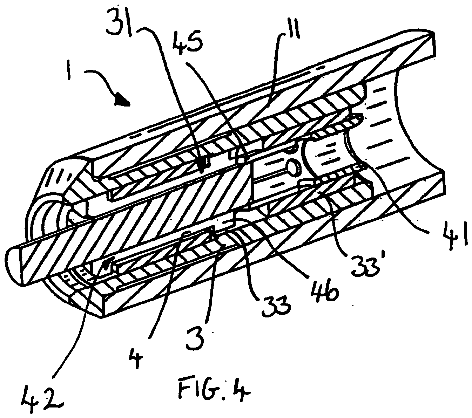

Figure 4 shows yet another rotary tool holder assembly of a similar type to that shown in Figures 2 and 3 above. The general structure and operation of the rotary tool holder assembly 1 shown in Figure 4 is similar to the rotary tool holder assembly shown in Figures 2 and 3 and thus detailed description of these aspects will be omitted. The rotary tool holder assembly 1 of Figure 4 has many parts which correspond to those in the rotary tool holder assemblies of Figures 2 and 3 and the same reference numerals will be used to indicate those corresponding parts.

Here the collet 4 is supported in two ways relative to the collet receiving portion 3. At a first location the arms 42 of the collet 4 each comprise a projection 46 which is arranged to contact with a supporting portion 33 of the collet receiving portion 3. Secondly, a support sleeve 33' is provided at another location in the collet receiving portion 3 to support the ends of the arms 42 and at least part of the main body 41 of the collet.

Thus, in this embodiment the collet receiving portion 3 comprises a support sleeve 33' which is inserted into the main bore 31 of the collet receiving portion 33 and extends along part of the length of this main bore.

As mentioned above in the present embodiments clearances of the order of 5 to 20 microns have been used. The precise size of the clearance in any given design is a matter of design choice taking into account many different considerations, including material selection, required flexibility of the collet jaws, the length and diameter of the gripping portion of the collet and the required gripping force on the tool. For speeds of 250,000 rpm and above, the current designs are appropriate for shaft diameters of 20mm and below.

## Claims

1. A rotary tool holder assembly (1) comprising a collet (4) having a plurality of jaws (43) for holding a tool and a collet receiving portion (3) having a bore in which the collet is disposed, the collet having a main body (41) and a plurality of arms (42),
wherein each of which arms (42) is arranged to flex relative to the main body (41), comprises a
respective one of the jaws and has an external tapered portion, the external tapered portions of the arms (42) being received in a correspondingly tapered portion (31a) of the bore of the receiving portion and the tool holder being arranged so that interaction of the tapers during axial movement of the collet relative to the receiving portion in one direction will drive the jaws (43) towards the axis of the collet (4) for gripping a carried tool, wherein each arm (42) comprises another external portion (45, 46) which is disposed in a supporting portion (33) of the collet receiving portion and outside of the tapered portion of the bore, and said other external portions (45, 46) of the arms and the supporting portion (33) are arranged so that said other external portions (45, 46) of the arms contact with the supporting portion (33) in use,
**characterised in that** the supporting portion (33) comprises a contact surface arranged for contacting with said other external portions (45, 46) of the arms and the contact surface and said other external portions (45, 46) of the arms are dimensioned and arranged so that with the rotary tool holder at rest, the contact surface faces the other external portions (45, 46) of the arms with a clearance therebetween; and
**in that** the contact surface and said other external portions (45, 46) of the arms are dimensioned and arranged so that when the rotary tool holder is rotated at or above a predetermined speed, the other external portions (45, 46) of the arms move out under centrifugal effects and contact the contact surface.

2. A rotary tool holder assembly according to claim 1 in which each said other external portion (45, 46) of the arms is disposed between the body portion of the collet and the respective jaw (43).

3. A rotary tool holder assembly according to claim 1 or claim 2 in which each said other external portions (45) of the arms and the supporting portion (33) are arranged so that, in use, the supporting portion contacts with substantially the whole length of the portion of each arm (42) which is outside of the tapered portion of the bore.

4. A rotary tool holder assembly according to any preceding claim in which each arm (42) comprises a projecting portio (46) for contact with the supporting portion (33).

5. A rotary tool holder assembly according to any preceding claim wherein the contact surface is non-tapered.

6. A rotary tool holder assembly according to claim 5 in which the contact surface is cylindrical and said other external portions (45, 46) of the arms lie together on a cylindrical surface.

7. A rotary tool holder assembly according to any preceding claim in which the main body (41) of the collet is supported in a main body support portion (33'), which may be part of or separate from the support portion (33).

8. A rotary tool holder assembly according to any preceding claim which comprises spring means, typically a spring pack (5), for driving the collet axially relative to the collet receiving portion (3) to actuate the jaws, with the spring means disposed around a portion of the collet (4).

9. A rotary tool holder assembly according to any preceding claim in which the rotary tool holder assembly comprises a shaft assembly (11) which comprises the collet receiving portion (3), in which the collet (4) is received.

10. A rotary tool holder assembly according to claim 9 in which the shaft assembly comprises a shaft (11) of steel.

11. A rotary tool holder assembly according to claim 9 in which the shaft assembly comprises a shaft (11) of ceramic material.

12. A rotary tool holder assembly according to claim 10 or claim 11 in which the collet receiving portion (3) is carried within the shaft (11).

13. A spindle comprising a rotary tool holder assembly according to any preceding claim journalled in a body (2) of the spindle.

14. A spindle according to claim 13 which is an aerostatic air bearing spindle with the tool holder assembly supported in air bearings (21, 22).

15. A spindle according to claim 13 or claim 14 in which the spindle is a drilling spindle.

## Patentansprüche

1. Eine Drehwerkzeughalter-Anordnung (1), umfassend eine Hülse (4) mit einer Mehrzahl von Klauen (43) zum Halten eines Werkzeugs sowie einen Hülsenaufnahmebereich (3) mit einer Bohrung, in der die Hülse angeordnet ist, wobei die Hülse einen Hauptkörper (41) sowie eine Mehrzahl von Armen (42) aufweist, wobei jeder der Arme (42) angeordnet ist, um sich in Bezug auf den Hauptkörper (41) zu biegen, eine jeweilige der Klauen aufweist und einen äußeren sich verjüngenden Bereich aufweist, wobei die äußeren sich verjüngenden Bereiche der Arme (42) in einem sich entsprechend verjüngenden Bereich (31a) der Bohrung des Aufnahmebereichs aufgenommen werden, und der Werkzeughalter ist so angeordnet, dass eine Wechselwirkung der Abschrägungen während einer axialen Bewegung der Hülse in Bezug auf den Aufnahmebereich in einer Richtung die Klauen (43) in Richtung der Achse der Hülse (4) zum Greifen eines getragenen Werkzeugs treiben wird, wobei jeder Arm (42) einen anderen äußeren Bereich umfasst, der in einem Unterstützungsbereich (33) des Hülsenaufnahmebereichs und außerhalb des sich verjüngenden Bereichs der Bohrung angeordnet ist, und die anderen äußeren Bereiche (45) der Arme sowie der Unterstützungsbereich (33) sind so angeordnet, dass die anderen äußeren Bereiche (45) der Arme mit dem Unterstützungsbereich (33) bei Verwendung in Berührung stehen,
**dadurch gekennzeichnet, dass** der Unterstützungsbereich (33) eine Kontaktoberfläche umfasst, die zum Berühren der anderen äußeren Bereichen (45) der Arme angeordnet ist und die Kontaktoberfläche und die anderen äußeren Bereiche (45) der Arme sind so dimensioniert und angeordnet, dass, mit dem Drehwerkzeughalter im Ruhezustand, die Kontaktoberfläche den anderen äußeren Bereichen (45) der Arme mit einem Spiel dazwischen zugewandt ist; sowie
dadurch, dass die Kontaktoberfläche und die anderen äußeren Bereiche (45) der Arme so dimensioniert und angeordnet sind, dass, wenn der Drehwerkzeughalter gedreht wird bei oder oberhalb einer vorbestimmten Geschwindigkeit, die anderen äußeren Bereiche (45) der Arme sich unter Zentrifugaleffekten raus bewegen und die Kontaktoberfläche berühren.

2. Eine Drehwerkzeughalter-Anordnung gemäß Patentanspruch 1, in der jeder der anderen äußeren Bereiche (45) der Arme zwischen dem Körperbereich der Hülse und der entsprechenden Klaue (43) angeordnet ist.

3. Eine Drehwerkzeughalter-Anordnung gemäß Patentanspruch 1 oder Patentanspruch 2, in der jeder der anderen äußeren Bereiche (45) der Arme und der Unterstützungsbereich (33) so angeordnet ist, dass, bei Verwendung, der Unterstützungsbereich im Wesentlichen die gesamte Länge des Bereichs jedes Arms (42) berührt, der außerhalb des sich verjüngenden Bereichs der Bohrung ist.

4. Eine Drehwerkzeughalter-Anordnung gemäß einem der vorhergehenden Patentansprüche, in der jeder Arm (42) einen vorstehenden Bereich zur Berührung des Unterstützungsbereichs (33) aufweist.

5. Eine Drehwerkzeughalter-Anordnung gemäß einem der vorhergehenden Patentansprüche, wobei die Kontaktoberfläche sich nicht verjüngt.

6. Eine Drehwerkzeughalter-Anordnung gemäß Patentanspruch 5, in der die Kontaktoberfläche zylindrisch ist und die anderen äußeren Bereiche (45) der Arme liegen zusammen auf einer zylindrischen Oberfläche.

7. Eine Drehwerkzeughalter-Anordnung gemäß einem der vorhergehenden Patentansprüche, in der der Hauptkörper (41) der Hülse in einem Hauptkörperunterstützungsbereich (33') unterstützt wird, der Teil sein kann von oder getrennt sein kann von dem Unterstützungsbereich (33).

8. Eine Drehwerkzeughalter-Anordnung gemäß einem der vorhergehenden Patentansprüche, die ein Federmittel, üblicherweise ein Federpaket (5), zum Antreiben der Hülse axial in Bezug auf den Hülsenaufnahmebereich (3) aufweist, um die Klauen zu betätigen, wobei das Federmittel um einen Bereich der Hülse (4) angeordnet ist.

9. Eine Drehwerkzeughalter-Anordnung gemäß einem der vorhergehenden Patentansprüche, in der die Drehwerkzeughalter-Anordnung eine Schaftanordnung (11) umfasst, die den Hülsenaufnahmebereich (3) aufweist, in dem die Hülse (4) aufgenommen ist.

10. Eine Drehwerkzeughalter-Anordnung gemäß Patentanspruch 9, in der die Schaftanordnung einen Schaft (11) aus Stahl umfasst.

11. Eine Drehwerkzeughalter-Anordnung gemäß Patentanspruch 9. in der die Schaftanordnung einen Schaft (11) aus einem keramischen Material aufweist.

12. Eine Drehwerkzeughalter-Anordnung gemäß Patentanspruch 10 oder Patentanspruch 11, in der der Hülsenaufnahmebereich (3) innerhalb des Schafts (11) getragen wird.

13. Eine Spindel, umfassend eine Drehwerkzeughalter-Anordnung gemäß einem der vorhergehenden Ansprüche, die in einem Körper (2) der Spindel gelagert wird.

14. Eine Spindel gemäß Patentanspruch 13, die eine aerostatische Luftlagerspindel ist, wobei die Werkzeughalter-Anordnung in Luftlagern (21, 22) unterstützt wird.

15. Eine Spindel gemäß Patentanspruch 13 oder Patentanspruch 14, in der die Spindel eine Bohrspindel ist.

## Revendications

1. Assemblage de support pour outil tournant (1), comprenant un mandrin (4) ayant une pluralité de mâchoires (43) pour tenir un outil et une partie réceptrice de mandrin (3) ayant un alésage dans lequel ledit mandrin est agencé, ledit mandrin ayant un corps principal (41) et une pluralité de bras (42), et dans lequel chacun desdits bras (42) est agencé afin de fléchir par rapport audit corps principal (41), comprend une mâchoire respective desdites mâchoires et possède une partie externe effilée, les parties externes effilées desdits bras (42) étant reçues dans une partie évasée, c'est-à-dire effilée de manière correspondante (31 a), de l'alésage de ladite partie réceptrice, et ledit support pour outil étant agencé de manière à ce qu'une interaction des parties effilée et évasée lors d'un mouvement axial dudit mandrin par rapport à ladite partie réceptrice dans une direction viennent entraîner lesdites mâchoires (43) vers l'axe dudit mandrin (4) pour agripper un outil porté, dans lequel chaque bras (42) comprend une autre partie externe agencée dans une partie de support (33) de ladite partie réceptrice de mandrin et à l'extérieur de la partie évasée dudit alésage, et les autres parties externes (45) desdits bras et ladite partie de support (33) sont agencées de manière à ce que lesdites autres parties externes (45) desdits bras viennent contacter ladite partie de support (33) lors de l'utilisation,
**caractérisé en ce que** ladite partie de support (33) comprend une surface de contact agencée pour venir en contact avec lesdites autres parties externes (45) desdits bras, et ladite surface de contact et lesdites autres parties externes (45) desdits bras sont dimensionnées et agencées de manière à ce que, lorsque ledit support pour outil est au repos, ladite surface de contact est tournée vers lesdites autres parties externes (45) desdits bras avec un écart entre ces-dernières; et
**en ce que** ladite surface de contact et lesdites autres parties externes (45) desdits bras sont dimensionnées et agencées de manière à ce que, lorsque ledit support pour outil est tourné au delà d'une vitesse prédéterminée, lesdites autres parties externes (45) desdits bras sortent par des effets centrifuges et viennent contacter ladite surface de contact.

2. Assemblage de support pour outil tournant selon la revendication 1, dans lequel chacune desdites autres parties externes (45) desdits bras est agencé entre la partie de corps dudit mandrin et ladite mâchoire respective (43).

3. Assemblage de support pour outil tournant selon la revendication 1 ou 2, dans lequel chacune desdites autres parties externes (45) desdits bras et ladite partie de support (33) sont agencées de manière à ce que, lors de l'utilisation, ladite partie de support vient contacter sensiblement la totalité de la longueur de la partie de chaque bras (42) qui se trouve à l'extérieur de la partie évasée dudit alésage.

4. Assemblage de support pour outil tournant selon l'une quelconque des revendications précédentes, dans lequel chaque bras (42) comprend une partie en saillie pour venir en contact avec ladite partie de support (33).

5. Assemblage de support pour outil tournant selon l'une quelconque des revendications précédentes, dans lequel la surface de contact est non-effilée.

6. Assemblage de support pour outil tournant selon la revendication 5, dans lequel ladite surface de contact est cylindrique et lesdites autres parties externes (45) desdits bras reposent conjointement sur une surface cylindrique.

7. Assemblage de support pour outil tournant selon l'une quelconque des revendications précédentes, dans lequel le corps principal (41) dudit mandrin est supporté dans une partie de support (33') dudit corps principal, cette dernière pouvant être une partie ou séparée de ladite partie de support (33).

8. Assemblage de support pour outil tournant selon l'une quelconque des revendications précédentes, comprenant un moyen de ressort, notamment un paquet de ressorts, pour (faire) entraîner ledit mandrin axialement par rapport à ladite partie réceptrice de mandrin (3) afin d'actionner lesdites mâchoires, ledit moyen de ressort se trouvant agencé autour d'une partie dudit mandrin (4).

9. Assemblage de support pour outil tournant selon l'une quelconque des revendications précédentes, dans lequel l'assemblage de support pour outil tournant comprend un assemblage d'arbre (11) qui comprend ladite partie réceptrice de mandrin (3) dans laquelle ledit mandrin (4) est reçu.

10. Assemblage de support pour outil tournant selon la revendication 9, dans lequel ledit assemblage d'arbre comprend un arbre (11) en acier.

11. Assemblage de support pour outil tournant selon la revendication 9, dans lequel ledit assemblage d'arbre comprend un arbre (11) en matériau céramique.

12. Assemblage de support pour outil tournant selon la revendication 10 ou 11, dans lequel ladite partie réceptrice de mandrin (3) est portée à l'intérieur dudit arbre (11).

13. Broche, comprenant un assemblage de support pour outil tournant selon l'une quelconque des revendications précédentes montée en rotation dans un corps (2) de ladite broche.

14. Broche selon la revendication 13, du type muni de palier à air aérostatique et dont l'assemblage de support pour outil tournant est supporté dans des paliers à air (21, 22).

15. Broche selon la revendication 13 ou 14, dans laquelle ladite broche est une broche de perçage.
